# EUROPEAN PATENT APPLICATION

(11) **EP 4 769 073 A1**
(43) Date of publication of application: **01.07.2026**
(21) Application number: 25209359.6
(22) Date of filing: 17.10.2025
(51) Int. Cl.: G06F 1/3234, G06F 3/06

(54) **A STORAGE DEVICE CONTROLLING LOW POWER MODE ENTRY DELAY AND A METHOD FOR OPERATING THE SAME**

(30) Priority: 27.12.2024 KR 20240197841
(71) Applicant: SK hynix Inc., Bubal-eub Icheon-si Gyeonggi-do 17336 (KR)
(72) Inventor: KIM, Jeong Hyun, 17336 Icheon-si, Gyeonggi-do (KR); KIM, Sung Su, 17336 Icheon-si, Gyeonggi-do (KR)
(74) Representative: Isarpatent

(57) **Abstract**

A storage device according to the embodiment of the present disclosure may include a memory for storing data and a controller determining whether to activate one or more of a plurality of low power mode entry techniques among a plurality of low-power mode delay techniques based on the power mode.

## Description

### TECHNICAL FIELD

Various embodiments of the present disclosure relate to a storage device controlling a low power mode entry delay and a method of operating the same.

### BACKGROUND

A storage device is a device for storing data according to a request from an external device such as a computer, a mobile terminal (e.g., a smart phone or tablet), or the like.

A storage device may include a memory for storing data therein and a controller for controlling the memory. The memory may be a volatile memory or a non-volatile memory. The controller may receive a command from an external device (i.e., a host), and execute or control operations to read, write, or erase data in the memory included in the storage device according to the received command.

### SUMMARY

Various embodiments of the present disclosure may provide a storage device capable of improving performance and optimizing power consumption by controlling the timing of entry into a low power mode, and an operating method thereof.

The embodiments of the present disclosure may be understood more readily by those skilled in the art by reference to the detailed description set forth below, but should not be construed as being limited to those set forth herein.

Various embodiments of the present disclosure may provide a storage device comprising: a memory for storing data; and a controller communicatively coupled to the memory and configured to control the memory for at least one of inputting or outputting of data by determining whether to activate one or more of a plurality of low power mode delay techniques based on the power mode.

Various embodiments of the present disclosure may provide a method of operating a storage device, comprising : receiving information on a power mode of the storage device; and determining whether to activate one or more of a plurality of low power mode delay techniques based on the power mode.

According to various embodiments of the present disclosure directed to a storage device that processes data, when controlling a low-power mode entry operation of the storage device, the storage device can determine whether to delay the low-power mode entry operation based on at least one of a reception history of a low-power mode entry request received from the outside, a history of the storage device entering the low-power mode by satisfying a low-power mode entry condition, and a reception history of a command received from the outside.

The effects of the present disclosure may be understood more clearly from the descriptions in the claims, but should not be construed as being limited to those described above.

### BRIEF DESCRIPTION OF THE DRAWINGS

The present disclosure will be more easily understood from the detailed description and accompanying drawings provided below, which are provided for illustration purposes only and are not intended to limit the present disclosure.
FIG. 1 is a schematic configuration diagram of a storage device according to an embodiment of the present disclosure.
FIG. 2 is a block diagram schematically illustrating a memory of FIG. 1.
FIG. 3 is a schematic configuration diagram of a storage device according to the present disclosure.
FIG. 4 is a diagram illustrating a power mode of a storage device according to the present disclosure.
FIG. 5 is a diagram illustrating an example of a first low-power mode delay technique according to the present disclosure.
FIG. 6 is a diagram illustrating another example of a first low-power mode delay technique according to the present disclosure.
FIG. 7 is a diagram illustrating another example of a first low-power mode delay technique according to the present disclosure.
FIG. 8 is a diagram illustrating an example of a second low-power mode delay technique according to the present disclosure.
FIG. 9 is a diagram illustrating another example of a second low-power mode delay technique according to the present disclosure.
FIG. 10 is a diagram illustrating an example of a third low-power mode delay technique according to the present disclosure.
FIG. 11 is a diagram illustrating another example of a third low-power mode delay technique according to the present disclosure.
FIG. 12 is a diagram illustrating an operating method of a storage device according to the present disclosure.

### DETAIL DESCRIPTION

Hereinafter, embodiments of the disclosure are described in detail with reference to the accompanying drawings. In assigning reference numerals to components of each drawing, the same components may be assigned the same numerals even when they are shown on different drawings. When determined to make the subject matter of the disclosure unclear, the detailed of the known art or functions may be skipped.

A storage device may enter a low-power mode in certain circumstances to reduce power consumption. However, entering a low-power mode may result in degrading the performance of the storage device. Accordingly, if performance improvement is required, the storage device may delay entering the low-power mode. Various implementations of the disclosed technology provide a storage device with techniques for controlling the timing of entry into a lower power mode such that the storage device can improve performance and optimize power consumption.

Hereinafter, various embodiments of the present disclosure are described in detail with reference to the accompanying drawings.

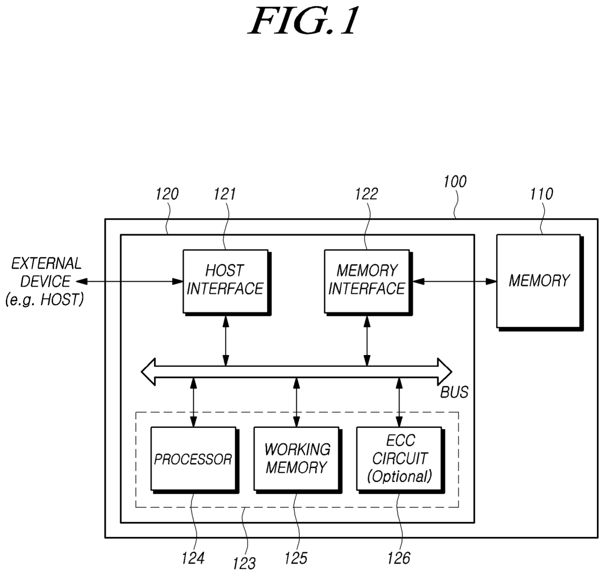

FIG. 1 is a schematic configuration diagram of a storage device 100 according to an embodiment of the disclosure.

Referring to FIG. 1, the storage device 100 may include a memory 110 that stores data and a controller 120 that controls the memory 110.

The memory 110 includes a plurality of memory blocks, and operates in response to the control of the controller 120. Operations of the memory 110 may include, for example, a read operation, a program operation (also referred to as a write operation) and an erase operation.

The memory 110 may include a memory cell array including a plurality of memory cells (also simply referred to as "cells") that store data.

For example, the memory 110 may be realized in various types of memory such as a DDR SDRAM (double data rate synchronous dynamic random access memory), an LPDDR4 (low power double data rate 4) SDRAM, a GDDR (graphics double data rate) SDRAM, an LPDDR (low power DDR), an RDRAM (Rambus dynamic random access memory), a NAND flash memory, a 3D NAND flash memory, a NOR flash memory, a resistive random access memory (RRAM), a phase-change memory (PRAM), a magnetoresistive random access memory (MRAM), a ferroelectric random access memory (FRAM) and/or a spin transfer torque random access memory (STT-RAM).

The memory 110 may be implemented as a three-dimensional array structure. For example, embodiments of the disclosure may be applied to a charge trap flash (CTF) in which a charge storage layer is configured by a dielectric layer and a flash memory in which a charge storage layer is configured by a conductive floating gate.

The memory 110 may receive a command and an address from the controller 120 and may access an area in the memory cell array that is selected by the address. In other words, the memory 110 may perform an operation indicated by the command, on the area selected by the address.

The memory 110 may perform a program operation, a read operation or an erase operation. For example, when performing the program operation, the memory 110 may program data to the area selected by the address. When performing the read operation, the memory 110 may read data from the area selected by the address. In the erase operation, the memory 110 may erase data stored in the area selected by the address.

The controller 120 may control write (program), read, erase and background operations for the memory 110. For example, background operations may include at least one from among a garbage collection (GC) operation, a wear leveling (WL) operation, a read reclaim (RR) operation, a bad block management (BBM) operation, and so forth.

In some implementations, the controller 120 may control the operation of the memory 110 based on a request from a device (e.g., a host) located outside the storage device 100. In some implementations, the controller 120 may control the operation of the memory 110 regardless of a request of the host.

The host may be a computer, an ultra mobile PC (UMPC), a workstation, a personal digital assistant (PDA), a tablet, a mobile phone, a smartphone, an e-book, a portable multimedia player (PMP), a portable game player, a navigation device, a black box, a digital camera, a digital multimedia broadcasting (DMB) player, a smart television, a digital audio recorder, a digital audio player, a digital picture recorder, a digital picture player, a digital video recorder, a digital video player, a storage configuring a data center, one of various electronic devices configuring a home network, one of various electronic devices configuring a computer network, one of various electronic devices configuring a telematics network, an RFID (radio frequency identification) device, and/or a mobility device (e.g., a vehicle, a robot or a drone) capable of driving under human control or autonomous driving, as non-limiting examples. In some implementations, the host may be a virtual reality (VR) device providing 2D or 3D virtual reality images or an augmented reality (AR) device providing augmented reality images. The host may be any one of various electronic devices that require the storage device 100 capable of storing data.

The host may include at least one operating system (OS). The operating system may generally manage and control the function and operation of the host, and may control interoperability between the host and the storage device 100. The operating system may be classified into a general operating system and a mobile operating system depending on the mobility of the host.

The controller 120 and the host may be devices that are separated from each other, or the controller 120 and the host may be integrated into one device. Hereunder, for the sake of convenience in explanation, descriptions will describe the controller 120 and the host as devices that are separated from each other.

Referring to FIG. 1, the controller 120 may include a memory interface 122 and a control circuit 123, and may further include a host interface 121.

The host interface 121 provides an interface for communication with the host. For example, the host interface 121 provides an interface that uses at least one from among various interface protocols such as a USB (universal serial bus) protocol, an MMC (multimedia card) protocol, a PCI (peripheral component interconnection) protocol, a PCI-E (PCI-express) protocol, an ATA (advanced technology attachment) protocol, a serial-ATA protocol, a parallel-ATA protocol, an SCSI (small computer system interface) protocol, an ESDI (enhanced small disk interface) protocol, an IDE (integrated drive electronics) protocol and/or a private protocol.

When receiving a command from the host, the control circuit 123 may receive the command through the host interface 121, and may perform an operation of processing the received command.

The memory interface 122 may be coupled with the memory 110 to provide an interface for communication with the memory 110. That is to say, the memory interface 122 may be configured to provide an interface between the memory 110 and the controller 120 in response to the control of the control circuit 123.

The control circuit 123 performs the general control operations of the controller 120 to control the operation of the memory 110. To this end, for instance, the control circuit 123 may include at least one of a processor 124 and a working memory 125, and may optionally include an error detection and correction circuit (ECC circuit) 126.

The processor 124 may control general operations of the controller 120, and may perform a logic calculation. The processor 124 may communicate with the host through the host interface 121, and may communicate with the memory 110 through the memory interface 122.

The processor 124 may execute logical operations required to perform the function of a flash translation layer (FTL). The processor 124 may translate a logical block address (LBA), provided by the host, into a physical block address (PBA) through the flash translation layer. The flash translation layer may receive the logical block address and translate the logical block address into the physical block address, by using a mapping table.

There are various address mapping methods of the flash translation layer, depending on a mapping unit. Representative address mapping methods include a page mapping method, a block mapping method and a hybrid mapping method.

The processor 124 may randomize data received from the host. For example, the processor 124 may randomize data received from the host by using a set randomizing seed. The randomized data may be provided to the memory 110, and may be programmed to a memory cell array of the memory 110.

In a read operation, the processor 124 may derandomize data received from the memory 110. For example, the processor 124 may derandomize data received from the memory 110 by using a derandomizing seed. The derandomized data may be outputted to the host.

The processor 124 may execute firmware to control the operation of the controller 120. Namely, in order to control the general operation of the controller 120 and perform a logic calculation, the processor 124 may execute (drive) firmware loaded in the working memory 125 upon booting. Hereafter, an operation of the storage device 100 according to embodiments of the disclosure will be described as implementing a processor 124 that executes firmware in which the corresponding operation is defined.

Firmware, as a program to be executed in the storage device 100 to drive the storage device 100, may include various functional layers. For example, the firmware may include binary data in which codes for executing the functional layers, respectively, are defined.

For example, the firmware may include at least one from among a flash translation layer, which performs a translating function between a logical address requested to the storage device 100 from the host and a physical address of the memory 110; a host interface layer (HIL), which serves to analyze a command requested to the storage device 100 as a storage device from the host and transfer the command to the flash translation layer; and a flash interface layer (FIL), which transfers a command, instructed from the flash translation layer, to the memory 110.

Such firmware may be loaded in the working memory 125 from, for example, the memory 110 or a separate nonvolatile memory (e.g., a ROM or a NOR Flash) located outside the memory 110. The processor 124 may first load all or a part of the firmware in the working memory 125 when executing a booting operation after power-on.

The processor 124 may perform a logic calculation, which is defined in the firmware loaded in the working memory 125, to control the general operation of the controller 120. The processor 124 may store a result of performing the logic calculation defined in the firmware, in the working memory 125. The processor 124 may control the controller 120 according to a result of performing the logic calculation defined in the firmware such that the controller 120 generates a command or a signal. When a part of firmware, in which a logic calculation to be performed is defined, is stored in the memory 110, but not loaded in the working memory 125, the processor 124 may generate an event (e.g., an interrupt) for loading the corresponding part of the firmware into the working memory 125 from the memory 110.

The processor 124 may load metadata necessary for driving firmware from the memory 110. The metadata, as data for managing the memory 110, may include for example management information on user data stored in the memory 110.

Firmware may be updated while the storage device 100 is manufactured or while the storage device 100 is operating. The controller 120 may download new firmware from the outside of the storage device 100 and update existing firmware with the new firmware.

To drive the controller 120, the working memory 125 may store necessary firmware, a program code, a command and/or data. The working memory 125 may be a volatile memory that includes, for example, at least one from among an SRAM (static RAM), a DRAM (dynamic RAM) and/or an SDRAM (synchronous DRAM). In some implementations, the controller 120 may additionally use a separate volatile memory (e.g. SRAM, DRAM) located outside the controller 120 in addition to the working memory 125.

The error detection and correction circuit 126 may detect an error bit of target data, and correct the detected error bit by using an error correction code. The target data may be, for example, data stored in the working memory 125 or data read from the memory 110.

The error detection and correction circuit 126 may decode data by using an error correction code. The error detection and correction circuit 126 may be realized by various code decoders. For example, a decoder that performs unsystematic code decoding or a decoder that performs systematic code decoding may be used.

For example, the error detection and correction circuit 126 may detect an error bit by the unit of a set sector in each of the read data, when each read data is constituted by a plurality of sectors. A sector may mean a data unit that is smaller than a page, which is the read unit of a flash memory. Sectors constituting each read data may be matched with one another using an address.

The error detection and correction circuit 126 may calculate a bit error rate (BER), and may determine whether an error is correctable or not, by sector units. For example, when a bit error rate is higher than a reference value, the error detection and correction circuit 126 may determine that a corresponding sector is uncorrectable or a fail. On the other hand, when a bit error rate is lower than the reference value, the error detection and correction circuit 126 may determine that a corresponding sector is correctable or a pass.

The error detection and correction circuit 126 may perform an error detection and correction operation sequentially for all read data. In the case where a sector included in read data is correctable, the error detection and correction circuit 126 may omit an error detection and correction operation for a corresponding sector for next read data. If the error detection and correction operation for all read data is ended in this way, then the error detection and correction circuit 126 may detect a sector which is uncorrectable in read data last. There may be one or more sectors that are determined to be uncorrectable. The error detection and correction circuit 126 may transfer information (e.g., address information) regarding a sector which is determined to be uncorrectable to the processor 124.

A bus 127 may be configured to provide channels among the components 121, 122, 124, 125 and 126 of the controller 120. The bus 127 may include, for example, a control bus for transferring various control signals, commands and the like, a data bus for transferring various data, and so forth.

Some components among the above-described components 121, 122, 124, 125 and 126 of the controller 120 may be omitted, or some components among the above-described components 121, 122, 124, 125 and 126 of the controller 120 may be integrated into one component. In addition to the above-described components 121, 122, 124, 125 and 126 of the controller 120, one or more other components may be added.

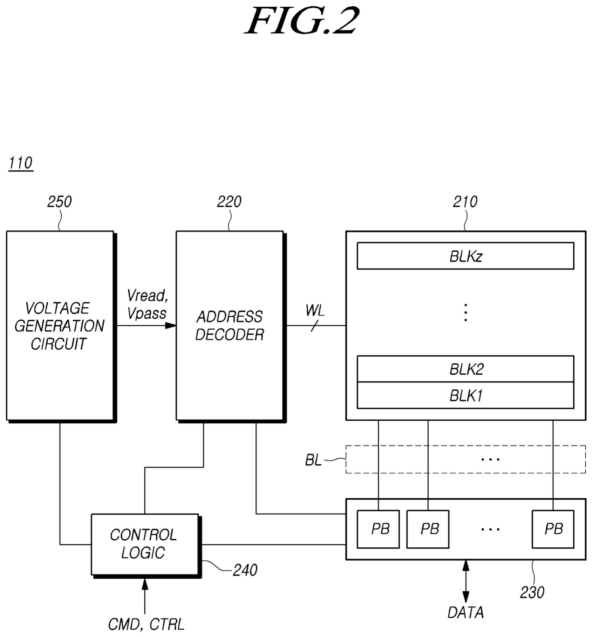

Hereinbelow, the memory 110 will be described in further detail with reference to FIG. 2.

FIG. 2 is a block diagram schematically illustrating a memory 110 of FIG. 1.

Referring to FIG. 2, the memory 110 according to an embodiment of the disclosure may include a memory cell array 210, an address decoder 220, a read and write circuit 230, a control logic 240, and a voltage generation circuit 250.

The memory cell array 210 may include a plurality of memory blocks BLK1 to BLKz (where z is a natural number of 2 or greater).

In the plurality of memory blocks BLK1 to BLKz, a plurality of word lines WL and a plurality of bit lines BL may be disposed, and a plurality of memory cells may be arranged.

The plurality of memory blocks BLK1 to BLKz may be coupled with the address decoder 220 through the plurality of word lines WL. The plurality of memory blocks BLK1 to BLKz may be coupled with the read and write circuit 230 through the plurality of bit lines BL.

Each of the plurality of memory blocks BLK1 to BLKz may include a plurality of memory cells. For example, the plurality of memory cells may be nonvolatile memory cells, and may be configured by nonvolatile memory cells that have vertical channel structures.

The memory cell array 210 may be configured by a memory cell array of a twodimensional structure or may be configured by a memory cell array of a three-dimensional structure.

Each of the plurality of memory cells included in the memory cell array 210 may store at least 1-bit data. For instance, each of the plurality of memory cells included in the memory cell array 210 may be a single level cell (SLC) that stores 1-bit data. In another instance, each of the plurality of memory cells included in the memory cell array 210 may be a multi-level cell (MLC) that stores 2-bit data. In still another instance, each of the plurality of memory cells included in the memory cell array 210 may be a triple level cell (TLC) that stores 3-bit data. In yet another instance, each of the plurality of memory cells included in the memory cell array 210 may be a quad level cell (QLC) that stores 4-bit data. In a further instance, the memory cell array 210 may include a plurality of memory cells, each of which stores 5 or more-bit data.

The number of bits of data stored in each of the plurality of memory cells may be dynamically determined. For example, a single-level cell that stores 1-bit data may be changed to a triple-level cell that stores 3-bit data.

Referring to FIG. 2, the address decoder 220, the read and write circuit 230, the control logic 240 and the voltage generation circuit 250 may operate as a peripheral circuit that drives the memory cell array 210.

The address decoder 220 may be coupled to the memory cell array 210 through the plurality of word lines WL.

The address decoder 220 may be configured to operate in response to the control of the control logic 240.

The address decoder 220 may receive an address through an input/output buffer in the memory 110. The address decoder 220 may be configured to decode a block address in the received address. The address decoder 220 may select at least one memory block depending on the decoded block address.

The address decoder 220 may receive a read voltage Vread and a pass voltage Vpass from the voltage generation circuit 250.

The address decoder 220 may apply the read voltage Vread to a selected word line WL in a selected memory block during a read operation, and may apply the pass voltage Vpass to the remaining unselected word lines WL.

The address decoder 220 may apply a verify voltage generated in the voltage generation circuit 250 to a selected word line WL in a selected memory block in a program verify operation, and may apply the pass voltage Vpass to the remaining unselected word lines WL.

The address decoder 220 may be configured to decode a column address in the received address. The address decoder 220 may transmit the decoded column address to the read and write circuit 230.

A read operation and a program operation of the memory 110 may be performed by the unit of a page. An address received when a read operation or a program operation is requested may include at least one from among a block address, a row address and a column address.

The address decoder 220 may select one memory block and one word line depending on a block address and a row address. A column address may be decoded by the address decoder 220 and be provided to the read and write circuit 230.

The address decoder 220 may include at least one from among a block decoder, a row decoder, a column decoder and an address buffer.

The read and write circuit 230 may include a plurality of page buffers PB. The read and write circuit 230 may operate as a read circuit in a read operation of the memory cell array 210, and may operate as a write circuit in a write operation of the memory cell array 210.

The read and write circuit 230 described above may also be referred to as a page buffer circuit or a data register circuit that includes a plurality of page buffers PB. The read and write circuit 230 may include data buffers that take charge of a data processing function, and may further include cache buffers that take charge of a caching function.

The plurality of page buffers PB may be coupled to the memory cell array 210 through the plurality of bit lines BL. The plurality of page buffers PB may continuously supply sensing current to bit lines BL coupled with memory cells to sense threshold voltages (Vth) of the memory cells in a read operation and a program verify operation, and may latch sensing data by sensing, through sensing nodes, changes in the amounts of current flowing, depending on the programmed states of the corresponding memory cells.

The read and write circuit 230 may operate in response to page buffer control signals outputted from the control logic 240.

In a read operation, the read and write circuit 230 temporarily stores read data by sensing data of memory cells, and then, outputs data to the input/output buffer of the memory 110. As an exemplary embodiment, the read and write circuit 230 may include a column select circuit in addition to the page buffers PB or the page registers.

The control logic 240 may be coupled with the address decoder 220, the read and write circuit 230 and the voltage generation circuit 250. The control logic 240 may receive a command CMD and a control signal CTRL through the input/output buffer of the memory 110.

The control logic 240 may be configured to control general operations of the memory 110 in response to the control signal CTRL. The control logic 240 may output control signals for adjusting the precharge potential levels of the sensing nodes of the plurality of page buffers PB.

The control logic 240 may control the read and write circuit 230 to perform a read operation of the memory cell array 210. The voltage generation circuit 250 may generate the read voltage Vread and the pass voltage Vpass used in a read operation, in response to a voltage generation circuit control signal outputted from the control logic 240.

Each memory block of the memory 110 described above may be configured by a plurality of pages corresponding to a plurality of word lines WL and a plurality of strings corresponding to a plurality of bit lines BL.

In a memory block BLK, a plurality of word lines WL and a plurality of bit lines BL may be disposed to intersect with each other. For example, each of the plurality of word lines WL may be disposed in a row direction, and each of the plurality of bit lines BL may be disposed in a column direction. In another example, each of the plurality of word lines WL may be disposed in a column direction, and each of the plurality of bit lines BL may be disposed in a row direction.

A memory cell may be coupled to one of the plurality of word lines WL and one of the plurality of bit lines BL. A transistor may be disposed in each memory cell.

For example, a transistor disposed in each memory cell may include a drain, a source, and a gate. The drain (or source) of the transistor may be coupled with a corresponding bit line BL directly or via another transistor. The source (or drain) of the transistor may be coupled with a source line (which may be the ground) directly or via another transistor. The gate of the transistor may include a floating gate, which is surrounded by a dielectric, and a control gate to which a gate voltage is applied from a word line WL.

In each memory block, a first select line (also referred to as a source select line or a drain select line) may be additionally disposed outside a first outermost word line more adjacent to the read and write circuit 230 between two outermost word lines, and a second select line (also referred to as a drain select line or a source select line) may be additionally disposed outside a second outermost word line between the two outermost word lines.

At least one dummy word line may be additionally disposed between the first outermost word line and the first select line. At least one dummy word line may also be additionally disposed between the second outermost word line and the second select line.

A read operation and a program operation (write operation) of the memory block described above may be performed by the unit of a page, and an erase operation may be performed by the unit of a memory block.

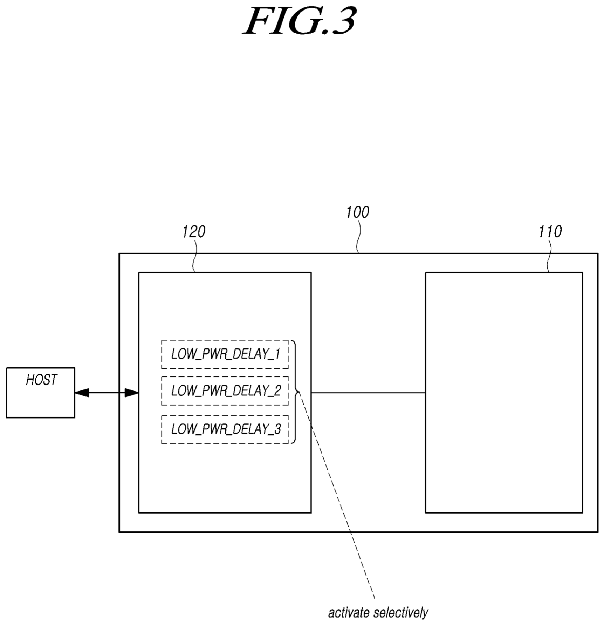

FIG. 3 is a schematic configuration diagram of a storage device according to the present disclosure.

Referring to FIG. 3, the storage device 100 may include a memory 110 and a controller 120.

Memory 110 can store data. The storage device 100 may write the data requested by the host to memory 110 and read the data requested by the host from memory 110.

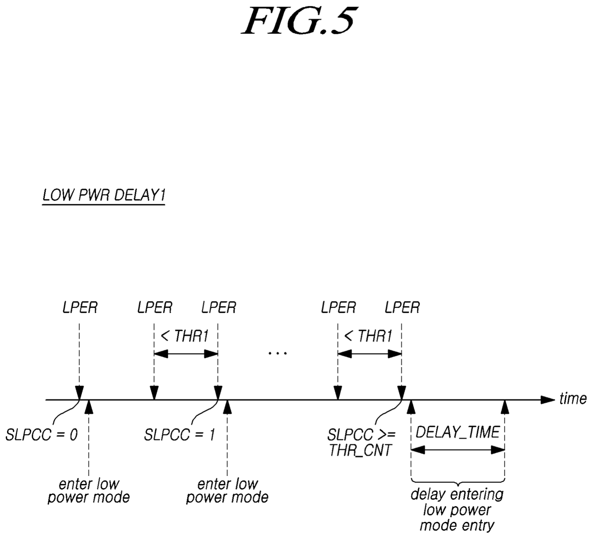

The controller 120 can control the memory 110 for input/output of data. The controller 120 can determine whether to activate one or more of a plurality of low power mode delay techniques according to the set power mode. For example, the controller 120 can determine whether to activate a first low power mode delay technique LOW_PWR_DELAY_1, a second low power mode delay technique LOW_PWR_DELAY_2, and a third low power mode delay technique LOW_PWR_DELAY_3. In some implementations, the controller 120 may store algorithms for performing the first low power mode delay technique LOW_PWR_DELAY_1, the second low power mode delay technique LOW_PWR_DELAY_2, and the third low power mode delay technique LOW_PWR_DELAY_3 and perform one of the first to third low power mode delay techniques based on the determination. The details of the first to third low power mode delay techniques will be described later in this patent document with reference to FIGS. 5-11. The controller 120 can maximize performance by preventing entry into the low power mode at a time when performance maximization is required (e.g., during performance and benchmark measurement periods). However, unconditionally disabling the entry into the low power mode may increase power consumption and trigger the performance throttling for reducing heat generation. This can negatively impact average performance.

Some implementations of the disclosed technology allow the controller 120 to selectively apply the low-power mode delay technique based on the power mode. For example, the controller 120 may delay entry into the low-power mode to improve the performance if the performance improvement is required. If power consumption reduction is required, the controller 120 may enter the low-power mode, thereby reducing the power consumption. The low-power mode delay technique may also be referred to as a low-power mode delay method, a low-power mode delay policy and so on.

In embodiments of the present disclosure, the power mode can be set in various manner.

For example, the controller 120 can receive setting information on the power mode from the host HOST. The controller 120 can set the power mode based on the received set information.

In another example, the controller 120 can set the power mode based on the amount of power consumed by the storage device 100 and the amount of power supplied to the storage device 100. If the amount of power consumed by the storage device 100 is greater than the amount of power supplied to the storage device 100, the controller 120 can change the power mode to reduce power consumption, and vice versa, can change the power mode to increase power consumption.

The first low power mode delay technique LOW_PWR_DELAY_1 is a technique for determining whether to delay entry into the low power mode based on the reception history of low power mode entry requests received from an external source (e.g., a host HOST). This will be described in detail below in FIGS. 5 to 7.

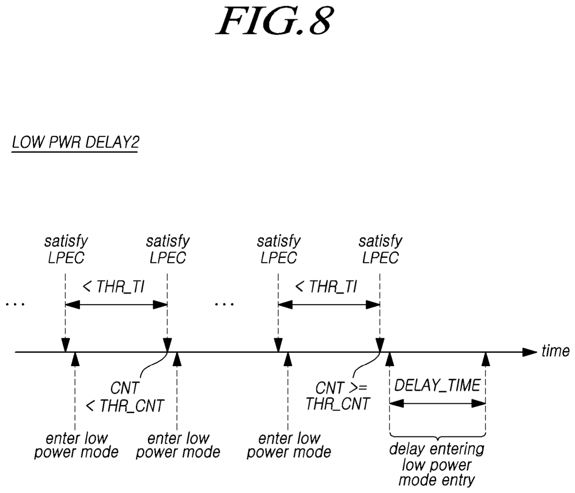

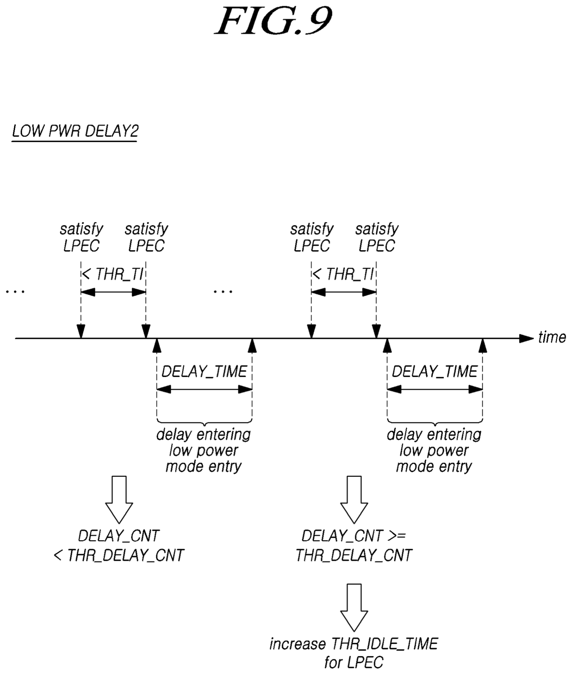

The second low power mode delay technique LOW_PWR_DELAY_2 is a technique for determining whether to delay entry into the low power mode when the storage device 100 satisfies the low power mode entry conditions regardless of the host HOST. This will be described in detail in FIGS. 8 and 9 below.

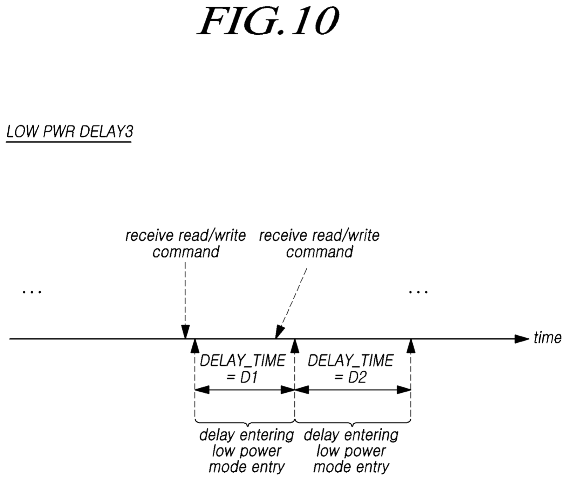

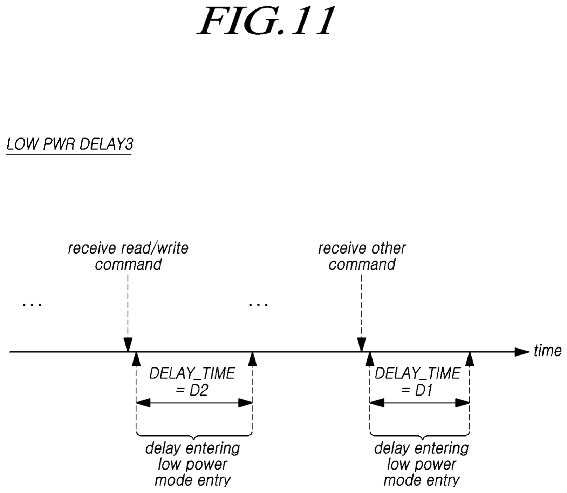

The third low power mode delay technique LOW_PWR_DELAY_3 is a technique for determining whether to delay entry into the low power mode based on the history of commands received from the host HOST. This will be described in detail in FIGS. 10 and 11 below.

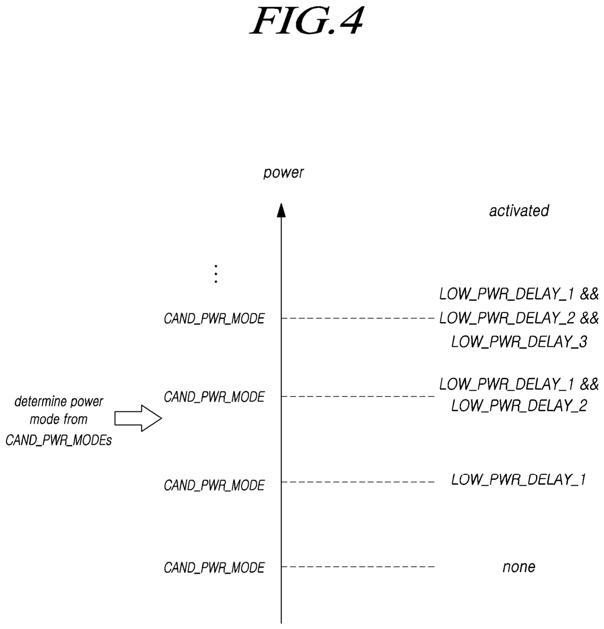

FIG. 4 is a diagram illustrating a power mode of the storage device 100 according to the present disclosure.

Referring to FIG. 4, the power mode of the storage device 100 may be one of a plurality of candidate power modes CAND_PWR_MODE. For example, the power mode of the storage device 100 may be classified into performance mode 1, performance mode 2, standard mode, power saving mode 1 and power saving mode 2, etc.

In this case, the number of low-power mode delay techniques activated in each candidate power mode may vary depending on the size of the available power corresponding to each of the candidate power modes CAND_PWR_MODE. The amount of the available power may be determined as the average power available during a time period of a set length.

In embodiments of the present disclosure, as the amount of the power available in the candidate power mode increases, the number of low power mode delay techniques activated in the candidate power mode may increase.

When the amount of the power available in the first candidate power mode among the plurality of candidate power modes CAND_PWR_MODE is greater than the amount of the power available in the second candidate power mode among the plurality of candidate power modes CAND_PWR_MODE, the number of low power mode delay techniques activated in the first candidate power mode among the plurality of low power mode delay techniques (e.g., the first low power mode delay technique LOW_PWR_DELAY_1, the second low power mode delay technique LOW_PWR_DELAY_2, and the third low power mode delay technique LOW_PWR_DELAY_3) may be greater than the number of techniques activated in the second candidate power mode.

In FIG. 4, the amount of power available in a candidate power mode in which only the first low power mode delay technique LOW_PWR_DELAY_1 is activated, is greater than the amount of power available in a candidate power mode in which all low power mode delay techniques are inactivated.

The amount of the power available in the candidate power mode in which the first low power mode delay technique LOW_PWR_DELAY_1 and the second low power mode delay technique LOW_PWR_DELAY_2 are activated is greater than the amount of the power available in the candidate power mode in which only the first low power mode delay technique LOW_PWR_DELAY_1 is activated.

The amount of the power available in the candidate power mode in which the first low power mode delay technique LOW_PWR_DELAY_1, the second low power mode delay technique LOW_PWR_DELAY_2, and the third low power mode delay technique LOW_PWR_DELAY_3 are activated is greater than the amount of the power available in the candidate power mode in which the first low power mode delay technique LOW_PWR_DELAY_1 and the second low power mode delay technique LOW_PWR_DELAY_2 are activated.

FIG. 5 is a diagram illustrating an example of a first low-power mode delay technique according to the present disclosure.

In embodiments according to the present disclosure, the first low power mode delay technique LOW_PWR_DELAY_1 may include increase a short low power mode cumulative count SLPCC when a time difference between a present point and a previous low power mode entry point is less than a first threshold time THR1, when a low power mode entry request LPER is received from a host HOST.

When it is expected to enter an idle state, the host HOST can transmit a low power mode entry request LPER to the storage device 100. In this case, the power consumption and response time of the storage device 100 may vary depending on the depth of the low power mode indicated by the low power mode entry request LPER. The depth of the lower power mode may refer to the level of power reduction. If the depth of the power reduction is deeper, more aggressive power-saving is performed.

As the depth of the low power mode indicated by the low power mode entry request LPER increases or becomes deeper, the power consumption of the storage device 100 decreases, but the response time may increase.

On the other hand, as the depth of the low power mode indicated by the low power mode entry request LPER decreases or becomes shallower, the response time of the storage device 100 decreases, but the power consumption may increase.

In FIG. 5, at a time of receiving the low power mode entry request LPER from the host HOST at first, the storage device 100 may enter the low power mode. In this case, the value of the short low power mode cumulative count SLPCC may be 0.

Thereafter, another low power mode entry request LPER is received from the host HOST after receiving the low power mode entry request LPER. In the example as shown in FIG. 5, the time difference between the present point and the previous low power mode entry point may be less than the first threshold time THR1. In this case, the controller 120 of the storage device 100 may increase the value of the short low power mode cumulative count SLPCC to 1. Thereafter, the storage device 100 may enter the low power mode.

FIG. 5 further illustrates the storage device 100 applies the first low power mode delay technique LOW_PWR_DELAY_1 . In the implementation, when the short low power mode cumulative count SLPCC becomes greater than or equal to the threshold count THR_CNT, the controller 120 of the storage device 100 delays the entry into the low power mode by a set delay time DELAY_TIME.

If short low power mode cumulative count SLPCC is large (e.g., greater than or equal to the threshold count THR_CNT), it indicates that there have been enough number of cycles in which the device has entered the low power mode for a short time and then exited from the low power mode. In this case, while the effect of reducing the power consumption of the storage device 100 is minimal, the performance of the storage device 100 is adversely affected.

Accordingly, in the implementations, the controller 120 delays the entry into the low power mode instead of entering the low power mode for a short time.

Delaying the entry into the low power mode by the delay time DELAY_TIME means that the storage device 100 does not enter the low power mode during the delay time DELAY_TIME even if it satisfies the low power mode entry condition.

In the example as shown in FIG. 5, if the storage device 100 receives a low power mode entry request LPER from the host HOST and the time difference between the receiving of the present low power mode entry request LPER and the receiving of the previous low power mode entry request LPER is less than the first threshold time THR1, the controller 120 increases the value of the short low power mode cumulative count SLPCC by 1. Then, if the increased value of the short low power mode cumulative count SLPCC is greater than the threshold count THR_CNT, it does not enter the low power mode instantly. Rather, the controller 120 of the storage device 100 enters the low power mode after the delay time DELAY_TIME has elapsed.

In some implementations, even when the low power mode entry of the storage device 100 is delayed, the controller 120 of the storage device 100 may transmit, to the host HOST, a response message indicating that the storage device 100 has entered the low power mode in response to the low power mode entry request LPER.

In the embodiment of the present disclosure, the first threshold time THR1 may be a preset value or a value determined based on an average of time differences between two consecutive low power mode entry points during a preset time period.

Similarly, the threshold count THR_CNT may be a preset value or may be a value determined based on an average of short low power mode cumulative counts SLPCC during a preset time period.

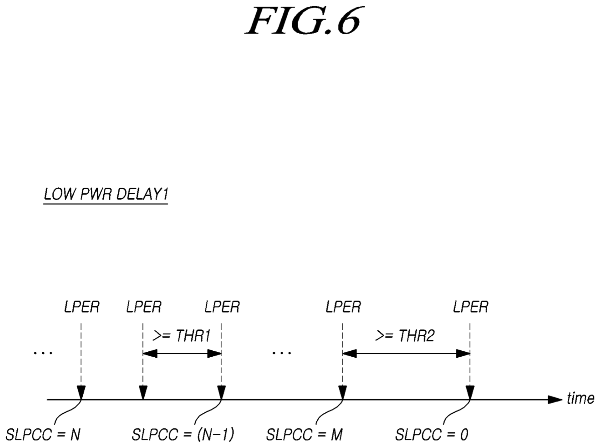

FIG. 6 is a diagram illustrating another example of the first low power mode delay technique LOW_PWR_DELAY_1 according to the present disclosure.

In the embodiments of the present disclosure, the first low power mode delay technique LOW_PWR_DELAY_1 may include decrease the value of the short low power mode cumulative count SLPCC when the time difference between the present point and the previous low power mode entry point is equal to or greater than the first threshold time THR1.

In FIG. 6, when the value of the short low power mode cumulative count SLPCC is N (N is a natural number) by receiving the LPER, if another LPER is received with the time difference between the present point and the previous low power mode entry point which is equal to or greater than the first threshold time THR1, the controller 120 of the storage device 100 may decrease the value of the short low power mode cumulative count SLPCC to (N-1) in response to receiving the another LPER.

In the embodiments of the present disclosure, the first low power mode delay technique LOW_PWR_DELAY_1 may include initialize the value of the short low power mode cumulative count SLPCC to a preset value (e.g. 0), when the time difference between the present point and the previous low power mode entry point is greater than or equal to the second threshold time THR2. In this case, the second threshold time THR2 is longer than the first threshold time THR1.

In FIG. 6, when the value of the short low power mode cumulative count SLPCC is M (M is an integer greater than or equal to 0), if another LPER is received with the time difference between the present point and the previous low power mode entry point which is greater than or equal to the second threshold time THR2, the controller 120 of the storage device 100 may initialize the value of the short low power mode cumulative count SLPCC to 0.

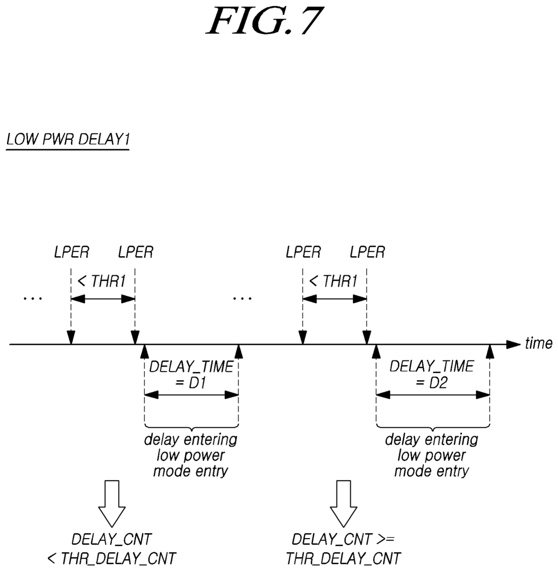

FIG. 7 is a diagram illustrating another example of the first low power mode delay technique LOW_PWR_DELAY_1 according to the present disclosure.

In the embodiments of the present disclosure, the first low power mode delay technique LOW_PWR_DELAY_1 may include increase the delay time DELAY_TIME when the accumulated delay count DELAY_CNT is greater than or equal to the threshold delay count THR_DELAY_CNT. In this case, the accumulated delay count DELAY_CNT may be the number of times the controller 120 delays entering the low power mode during a set time period.

In FIG. 7, at the time of receiving the low power mode entry request LPER from the host HOST, the controller 120 of the storage device 100 may delay the low power mode entry by the delay time DELAY_TIME.

When the time difference between the present point and the previous low power mode entry point is less than the first threshold time THR1 and the short low power mode cumulative count SLPCC is greater than or equal to the threshold count THR_CNT, the controller 120 can delay the low power mode entry by the set delay time DELAY_TIME.

In this case, the controller 120 can compare the cumulative delay count DELAY_CNT that indicates the number of times the low power mode entry has been delayed, with the threshold delay count THR_DELAY_CNT. When the cumulative delay count DELAY_CNT is less than the threshold delay count THR_DELAY_CNT, the controller 120 can set the delay time DELAY_TIME to D1.

Afterwards, at a time of receiving a low power mode entry request LPER from the host HOST, the controller 120 of the storage device 100 can delay the entry into the low power mode by D1 by the delay time DELAY_TIME.

In this case, the controller 120 can compare the accumulated delay count DELAY_CNT and the threshold delay count THR_DELAY_CNT again. When the accumulated delay count DELAY_CNT is greater than or equal to the threshold delay count THR_DELAY_CNT, the controller 120 can set the delay time DELAY_TIME to D2. In this case, D2 is greater than D1.

If the low power mode delay technique is not activated because the low power mode entry request LPER is not received from the host HOST for the set threshold time, the controller 120 may reduce or initialize the delay time DELAY_TIME.

FIG. 8 is a diagram illustrating an example of the second low power mode delay technique LOW_PWR_DELAY_2 according to the present disclosure.

In the embodiments of the present disclosure, when the storage device 100 satisfies the low power mode entry condition by itself, the second low power mode delay technique LOW_PWR_DELAY_2 may include recording the time interval between the present time point and the time point at which the storage device (100) previously satisfies the low power mode entry condition LPEC.

It may be determined that the controller 120 of the storage device 100 satisfies the low power mode entry condition LPEC in the following cases.

For example, it may be determined that the storage device 100 satisfies the low power mode entry condition LPEC when the time of the controller 120 during which the idle state has been continuously maintained is longer or equal to a set threshold idle time. In some implementations, the storage device 100 is maintained in the idle state if the bus 127 included in the storage device 100 is maintained in the idle state (e.g., a state in which no data is transmitted through the bus 127.

The second low power mode delay technique LOW_PWR_DELAY_2 may include delaying the entry into the low power mode when the cumulative number of times CNT is equal to or greater than the threshold entry number THR_CNT. In this case, the cumulative number of times CNT may be the number of times that the aforementioned time interval between the present time point and the time point at which the storage device previously satisfies the LPEC is less than the threshold time interval THR_TI during the set first time period.

In FIG. 8, when the storage device 100 satisfies the low power mode entry condition LPEC, the controller 120 of the storage device 100 can compare the time interval between the present time point and the time point at which the low power mode entry condition was previously satisfied, with the threshold time interval THR_TI.

When the time interval is less than or equal to the threshold time interval THR_TI, if the cumulative number of times CNT is less than the threshold entry number THR_CNT, the controller 120 of the storage device 100 does not delay the entry into the low power mode. Accordingly, the storage device 100 can enter the low power mode immediately when the low power mode entry condition LPEC is satisfied without any delay.

Thereafter, when the storage device 100 satisfies the low power mode entry condition LPEC, the controller 120 of the storage device 100 can compare the time interval between the present time point and the time point at which the low power mode entry condition was previously satisfied, with the threshold time interval THR_TI again.

When the time interval is less than or equal to the threshold time interval THR_TI, if the cumulative number of times CNT is greater than or equal to the threshold entry number THR_CNT, the controller 120 of the storage device 100 delays entry into the low power mode. Accordingly, the storage device 100 may not enter the low power mode immediately even when the low power mode entry condition LPEC is satisfied. Rather, the storage device 100 may enter the low power mode after the delay time DELAY_TIME has elapsed.

FIG. 9 is a diagram illustrating another example of a second low power mode delay technique LOW_PWR_DELAY_2 according to the present disclosure.

In the embodiments of the present disclosure, the second low power mode delay technique LOW_PWR_DELAY_2 may include increasing a threshold idle time THR_IDLE_TIME used to determine whether the storage device 100 satisfies the low power mode entry condition LPEC on its own, when the cumulative number of delays DELAY_CNT that indicates the number of times that the entry into the low power mode has been delayed during the set second time period is equal to or greater than the threshold number of delays THR_DELAY_CNT.

In FIG. 9, when the accumulated number of times CNT that the time interval is less than the threshold time interval THR_TI during the set first time interval is greater than or equal to the threshold entry number THR_CNT, the controller 120 can delay the entry into the low power mode by the delay time DELAY_TIME.

In this case, if the number of times DELAY_CNT that delays the controller 120 the entry into the low power mode is less than the threshold delay number THR_DELAY_CNT, the controller 120 can maintain the threshold idle time THR_IDLE_TIME as it is.

Afterwards, when the accumulated number of times CNT that the time interval is less than the threshold time interval THR_TI during the set first time interval is greater than or equal to the threshold entry number THR_CNT, the controller 120 can delay the entry into the low power mode again by the delay time DELAY_TIME.

In this case, the controller 120 can increase the threshold idle time THR_IDLE_TIME if the number of times DELAY_CNT of delaying the entry into the low power mode is greater than or equal to the threshold delay number THR_DELAY_CNT. As the threshold idle time THR_IDLE_TIME increases, the possibility that the storage device 100 will satisfy the low power mode entry condition LPEC on its own decreases.

In some implementations, the controller 120 can decrease or initialize the aforementioned threshold idle time THR_IDLE_TIME if the storage device 100 continues to be idle for a reference time. In this case, the reference time may be longer than the threshold idle time THR_IDLE_TIME.

FIG. 10 is a diagram illustrating an example of the third low power mode delay technique LOW_PWR_DELAY_3 according to the present disclosure.

In the embodiments of the present disclosure, the third low power mode delay technique LOW_PWR_DELAY_3 may include delaying entry into the low power mode for a set delay time DELAY_TIME, when waking up from the low power mode by receiving a read command or a write command from the host HOST.

When the host HOST transmits a data transfer command (e.g. a read command, a write command) to the storage device 100 at a state that the storage device 100 has entered the low power mode, there is a high possibility that the host HOST will continuously transmit data transfer commands to the storage device 100 thereafter. Accordingly, the storage device 100 can improve performance by delaying entry into the low power mode.

In FIG. 10, when waking up from the low power mode by receiving a read command or a write command from the host HOST, the controller 120 of the storage device 100 can delay entering the low power mode for a delay time DELAY_TIME. Thus, the storage device 100 does not enter the low power mode until the delay time DELAY_TIME elapses, even if it satisfies the low power mode entry condition. In this case, the value of the delay time DELAY_TIME can be D1.

When waking up from the low power mode by receiving a read command or a write command from the host HOST, the controller 120 can adjust the value of the delay time DELAY_TIME. For example, when the controller 120 receives a read command or a write command from the host HOST while delaying the entry into the low power mode, it may increase the value of the delay time DELAY_TIME from D1 to D2. In the example of FIG. 10, the controller starts the delay time DELAY_TIME D2 after the delay time DELAY_TIME D1 expires.

FIG. 11 is a diagram illustrating another example of the third low power mode delay technique LOW_PWR_DELAY_3 according to the present disclosure.

In the embodiments of the present disclosure, the third low power mode delay technique LOW_PWR_DELAY_3 may include initializing the delay time DELAY_TIME when waking up from the low power mode by receiving a command other than the read command or the write command (e.g., a device setting command) from the host HOST.

In FIG. 11, the controller 120 of the storage device 100 can reduce the value of the delay time DELAY_TIME from D2 to D1 when receiving the remaining command from the host HOST. Thus, in the example as shown in FIG. 11, the controller 120 may delay the entry to the low power mode by the DELAY_TIME D1 after receiving other command from the host HOST.

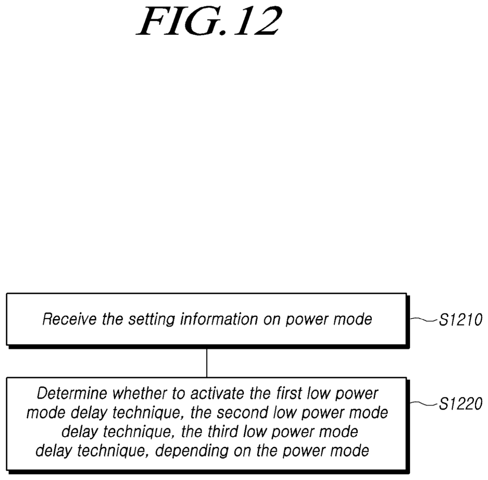

FIG. 12 is a drawing illustrating an operating method of the storage device 100 according to the present disclosure.

Referring to FIG. 12, the operating method of the storage device 100 can include receiving setting information on a power mode (S1210).

As an example, the power mode can be one of a plurality of candidate power modes CAND_PWR_MODE.

In this case, when, among the multiple candidate power modes, the amount of the power available in the first candidate power mode CAND_PWR_MODE is greater than the amount of the power available in the second candidate power mode, the number of low power mode delay techniques activated in the first candidate power mode among the first low power mode delay technique LOW_PWR_DELAY_1, the second low power mode delay technique LOW_PWR_DELAY_2, and the third low power mode delay technique LOW_PWR_DELAY_3 may be greater than the number of low power mode delay techniques activated in the second candidate power mode.

The operation method of the storage device 100 may include determining whether to activate a plurality of low power mode delay techniques (e.g., a first low power mode delay technique LOW_PWR_DELAY_1, a second low power mode delay technique LOW_PWR_DELAY_2, and a third low power mode delay technique LOW_PWR_DELAY_3) according to the power mode (S1220).

The first low power mode delay technique LOW_PWR_DELAY_1 may include determining whether to delay entry into the low power mode based on the reception history of a low power mode entry request LPER received from an external source (e.g., a host HOST).

For example, when a low power mode entry request is received from the host HOST, the first low power mode delay technique LOW_PWR_DELAY_1 may increase the short low power mode cumulative count SLPCC when the time difference between the present point and the previous low power mode entry point is less than the first threshold time THR1, while delaying the low power mode entry by the set delay time DELAY_TIME when the short low power mode cumulative count SLPCC is greater than or equal to the threshold count THR_CNT.

In this case, the first low power mode delay technique LOW_PWR_DELAY_1 may decrease the short low power mode cumulative count SLPCC when the time difference between the present point and the previous low power mode entry point is greater than or equal to the first threshold time THR1.

In this case, the first low power mode delay technique LOW_PWR_DELAY_1 may increase the delay time DELAY_TIME when the accumulated delay count DELAY_CNT that delays entry into the low power mode for a set time period is greater than or equal to the threshold delay count THR_DELAY_CNT.

The second low power mode delay technique LOW_PWR_DELAY_2 may include determining whether to delay entry into the low power mode when the storage device 100 satisfies the low power mode entry condition.

For example, the second low-power mode delay technique LOW_PWR_DELAY_2 may record a time interval between the present time when the storage device 100 satisfies the low-power mode entry condition and the time when the low-power mode entry condition was previously satisfied. It may delay the low-power mode entry when the cumulative number of times CNT indicating the number of times that the time interval is less than the threshold time interval THR_TI during the set first time period is greater than or equal to the threshold entry number THR_CNT.

In this case, the low-power mode entry condition may be satisfied when the storage device 100 is in an idle state for a time equal to or greater than the set threshold idle time THR_IDLE_TIME. And the second low power mode delay technique LOW_PWR_DELAY_2 may include increasing the threshold idle time THR_IDLE_TIME when the accumulated delay count DELAY_CNT, which is the number of times the low power mode entry is delayed for the set second time period, is greater than or equal to the threshold delay count THR_DELAY_CNT.

The third low power mode delay technique LOW_PWR_DELAY_3 may include determining whether to delay the low power mode entry based on the history of commands received from the host HOST.

In an example, the third low power mode delay technique LOW_PWR_DELAY_3 may include delaying the low power mode entry for a set delay time DELAY_TIME when waking up from the low power mode by receiving a read command or a write command from the host HOST.

In this case, the third low power mode delay technique LOW_PWR_DELAY_3 may include initializing the delay time DELAY_TIME when waking up from the low power mode by receiving a command other than a read command and a write command from the host HOST.

Although exemplary embodiments of the disclosure have been described for illustrative purposes, those skilled in the art will appreciate that various modifications, additions and substitutions are possible, without departing from the scope and spirit of the disclosure. Therefore, the embodiments disclosed above and in the accompanying drawings should be considered in a descriptive sense only and not for limiting the technological scope. The technological scope of the disclosure is not limited by the embodiments and the accompanying drawings. The spirit and scope of the disclosure should be interpreted in connection with the appended claims and encompass all equivalents falling within the scope of the appended claims.

## Claims

1. A storage device, comprising:
a memory for storing data; and
a controller communicatively coupled to the memory and configured to control the memory for at least one of inputting or outputting of the data by determining whether to activate at least one of a plurality of low power mode delay techniques based on the power mode.

2. The storage device according to claim 1,
wherein the plurality of low power mode delay techniques comprise a first low power mode delay technique, a second low power mode delay technique and a third low power mode delay technique,
wherein, in response to activating of the first low power mode delay technique, the controller is configured to determine whether to delay a low power mode entry based on a history of receiving low power mode entry requests received from a host in communication with the controller,
wherein, in response to activating of the second low power mode delay technique, the controller is configured to determine whether to delay the low power mode entry based on whether the storage device satisfies a low power mode entry condition, and
wherein, in response to activating of the third low power mode delay technique, the controller is configured to determine whether to delay the low power mode entry based on a history of commands received from the host.

3. The storage device according to claim 1,
wherein the controller is configured to receive setting information on the power mode from the outside.

4. The storage device according to claim 1,
wherein the power mode is one of a plurality of candidate power modes including a first candidate power mode and a second candidate power mode, and
wherein, an amount of the power available in the first candidate power mode is greater than an amount of the power available in the second candidate power mode, and a number of low power mode delay techniques activated in the first candidate power mode is greater than the number of low power mode delay techniques activated in the second candidate power mode.

5. The storage device according to claim 2,
wherein, in response to receiving a low power mode entry request from the host, the first low-power mode delay technique is activated to allow the controller to increase a short low power mode cumulative count upon satisfying a condition that a time difference between a present point and a previous low power mode entry point is less than a first threshold time, and delay the low power mode entry by a set delay time upon satisfying a condition that the short low power mode cumulative count is greater than or equal to a threshold count.

6. The storage device according to claim 5,
wherein, in response to activating of the first low power mode delay techniques, the controller is further configured to decrease the short low power mode cumulative count upon satisfying a condition that the time difference between the present point and the previous low power mode entry point is longer than or equal to the first threshold time.

7. The storage device according to claim 6,
wherein, in response to activating of the first low power mode delay techniques, the controller is further configured to initialize the short low power mode cumulative count upon satisfying a condition that the time difference between the present point and the previous low power mode entry point is longer than or equal to a second threshold time, and
wherein the second threshold time is longer than the first threshold time.

8. The storage device according to claim 5,
wherein, in response to activating of the first low power mode delay techniques, the controller is further configured to increase the delay time upon satisfying a condition that a cumulative number of delays indicating a number of times that the low power mode entry has been delayed during a set time period is greater than or equal to a threshold number of delays.

9. The storage device according to claim 2,
wherein, in response to activating the second low power mode delay technique, the controller is further configured to record a time interval between time when the low power mode entry condition is currently satisfied and time when the low power mode entry condition was previously satisfied, and
wherein the controller is further configured to delay the entry into the low power mode upon satisfying a condition that an accumulated number of times indicating a number of times that the time interval is less than a threshold time interval during a set first time interval is greater than or equal to a threshold entry number.

10. The storage device according to claim 9,
wherein the controller is further configured to determine that the storage device has satisfied the low power mode entry condition upon satisfying a condition that time the storage device has been in an idle state is greater than or equal to a set threshold idle time, and
wherein, in response to activating of the second low power mode delay technique, the controller is further configured to increase the threshold idle time upon satisfying a condition that a cumulative delay number indicating a number of times that the low power mode entry has been delayed during the set second time interval is greater than or equal to the threshold delay number.

11. The storage device according to claim 2,
wherein, in response to activating of the third low power mode delay technique, the controller is further configured to delay an entry into the low power mode for a set delay time after waking up from the low power mode by receiving a read command or a write command from the host.

12. The storage device according to claim 11,
wherein, in response to activating of the third low power mode delay technique, the controller is further configured to initialize the delay time upon waking up from the low power mode by receiving a command other than the read command and the write command from the host.

13. A method for operating a storage device, comprising:
receiving information on a power mode of the storage device; and
determining whether to activate at least one of a plurality of low power mode delay techniques based on the power mode.

14. The method for operating a storage device according to claim 13,
wherein the plurality of low power mode delay techniques comprise a first low power mode delay technique, a second low power mode delay technique, and a third low power mode delay technique,
wherein in response to activating of the first low power mode delay technique, the method further comprises determining whether to delay a low power mode entry based on a reception history of a low power mode entry request received from a host communicatively coupled to the storage device, and
wherein in response to activating of the second low power mode delay technique, the method further comprises determining whether to delay the low power mode entry based on whether the storage device satisfies a low power mode entry condition, and
wherein in response to activating of the third low power mode delay technique, the method further comprises determining whether to delay the low power mode entry based on a history of commands received from the host.

15. The method for operating a storage device according to claim 14,
wherein in response to receiving a low power mode entry request from the host, the method further comprises increasing a short low power mode cumulative count upon satisfying a condition that a time difference between a present point and a previous low power mode entry point is less than a first threshold time, and delaying the low power mode entry by a set delay time upon satisfying a condition that the short low power mode cumulative count is greater than or equal to a threshold count.

16. The method for operating a storage device according to claim 15,
wherein in response to activating of the first low power mode delay technique, the method further comprises decreasing the short low power mode cumulative count upon satisfying a condition that a time difference between the present point and the previous low power mode entry point is greater than or equal to the first threshold time.

17. The method for operating a storage device according to claim 15,
wherein in response to activating of the first low power mode delay technique, the method further comprises increasing the delay time upon satisfying a condition that a cumulative delay number indicating a number of times that the low power mode entry has been delayed during a set time period is greater than or equal to a threshold delay number.

18. The method for operating a storage device according to claim 14,
wherein in response to activating of the second low power mode delay technique, the method further comprises recording a time interval between time when the low power mode entry condition is currently satisfied and time when the low power mode entry condition was previously satisfied, and delaying the entry into the low power mode upon satisfying a condition that an accumulated number of times indicating a number of times that the time interval is less than a threshold time interval during a set first time interval is greater than or equal to a threshold entry number.

19. The method for operating a storage device according to claim 14,
wherein in response to activating of the third low power mode delay technique, the method further comprises delaying the low power mode entry for a set delay time after waking up from the low power mode by receiving a read command or a write command from the host.

20. A storage device for processing data,
wherein the storage device is configured to determine whether to delay an entry into a low power mode based on at least one of a history of receiving a low power mode entry request received from an outside, a history that has entered the low power mode by satisfying a low power mode entry condition without receiving of the low power mode entry request, and a history of receiving a command from the outside.
